# EUROPÄISCHE PATENTANMELDUNG

(11) **EP 1 653 234 A1**
(43) Veröffentlichungstag der Anmeldung: **03.05.2006**
(21) Anmeldenummer: 04025466.6
(22) Anmeldetag: 27.10.2004
(51) Int. Cl.: G01N 35/02, G01N 1/00

(54) **Carouselartige Probeentnahmestation**

(71) Anmelder: Roche Diagnostics GmbH, 68305 Mannheim (DE); F. HOFFMANN-LA ROCHE AG, 4070 Basel (CH)
(72) Erfinder: Rauh, Jürgen, 5507 Mellingen (CH); Rosenberg, Burkard, 6048 Horw (CH)
(74) Vertreter: Troesch Scheidegger Werner AG

(57) **Zusammenfassung**

Eine Anordnung zum Entnehmen von Proben aus Behältnissen (41), enthaltend fluide Medien weist eine weitgehendst carouselartige Einrichtung (1) auf für das Anordnen der Behältnisse sowie mindestens eine Entnahmevorrichtung (31), für das Entnehmen der Proben aus den Behältnissen (41). An der carouselartigen Einrichtung (1) ist eine weitgehendst scheibenartig Abdeckung (9) vorgesehen, um wenigstens einen Teil der Behältnisse (41) weitgehendst abzudecken und/oder um Verschlüsse an den Behältnissen bei der Entnahme zu sichern. In der Abdeckung (9) sind wenigstens an einem Teil der Positionen, der unter der Abdeckung angeordneten Behältnisse Öffnungen (10) vorgesehen, um die jeweilige Entnahme durch die Abdeckung hindurch zu ermöglichen.

## Beschreibung

Die vorliegende Erfindung betrifft eine Anordnung zum Entnehmen von Proben aus Behältnissen enthaltend fluide Medien gemäss dem Oberbegriff nach Anspruch 1, eine rack-oder kartuschenartige Halterung für das Anordnen von Behältnissen sowie ein Verfahren zum Entnehmen von Proben aus Behältnissen enthalten fluide Medien.

In der Medizinaltechnik werden beispielsweise Blutproben zur Ermittlung eventueller Krankheiten in Geräten untersucht. Dabei werden vermehrt Probegefässe mit der Bezeichnung Vacutainer, Monovetter u. s. w. verwendet. Um Proben entnehmen zu können, werden in den meisten Fällen die Deckel bzw. so genannte Caps entfernt. Immermehr geht man aber davon aus, dass man sich diese Arbeit ersparen kann, indem man mit einer Probenadel direkt durch diese Deckel hindurchsticht, um die Probeflüssigkeit anzusaugen. Dabei muss das Probegefäss gehalten oder die Nadel zusätzlich geführt werden, sonst besteht die Gefahr einer Nadeldeformation bzw. Nadelbruches. Wird die Probenadel aus dem Deckel herausgezogen, muss zudem das Gefäss mit Deckel in irgendeiner Form zurückgehalten werden. Aus dem Stand der Technik sind eine Reihe von Geräten bzw. Stationen bekannt, bei welchen mit einer Probeentnahmenadel durch Caps hindurch pipettiert wird. In der Regel erfolgt die Probeentnahme immer an der gleichen Position, womit die Gefässe laufend zur Pipettierstation gebracht werden müssen. Die Probleme der Gefässzentrierung und Gefässrückhaltung werden vorwiegend mit dem Nadelkopf und einem Niederhalter gelöst. In diesem Zusammenhang wird in der JP 08 273 201 ein so genannter Sampling Apparatus beschrieben, bei welchem während der Probeentnahme mit einer Nadel mittels eines Niederhalters das die Probe enthaltende Behältnis zurückgehalten wird. In der EP 1 291 659 wird ein automatischer Probenanalysator beschrieben, der einen vertikal bewegbaren Hauptarm und einen horizontal bewegbaren Führungsarm aufweist, wobei der Führungsarm durch den Hauptarm getragen wird.

In der EP 0 984 285 wird zunächst mittels einer Kontrolleinheit festgestellt, ob ein Probegefäss offen oder geschlossen ist. Falls geschlossen, muss die Probeentnahmenadel mit einer grösseren Kraft bewegt werden, da der Deckel zu durchstossen ist. Mittels einer Reinigungseinheit wird ein allfällig vorhandener Deckel gleichzeitig auf dem Probegefäss gehalten, so dass beim Abziehen der Pipette das Probegefäss zurückgehalten wird.

In einer Reihe weiterer Dokumente aus dem Stand der Technik werden carouselartige Stationen beschrieben, an welchen Probeentnahmen durchgeführt werden, um eine Rationalisierung dieses Vorganges zu ermöglichen. So beschreibt die US 4 951 512 eine carouselartige Probenhalterung wobei Abteile im Carousel vorgesehen sind je für das Anordnen eines Probegefässes, welches mittels eines beweglichen Bodens für die Probeentnahme angehoben werden kann. Das Zurückhalten des Probegefässes erfolgt dabei nicht mittels eines eigentlichen Niederhalters, sondern erfolgt durch eine zusätzlich angeordnete Lochungsnadel, welche zusätzlich zur eigentlichen Pipette angeordnet ist.

In der EP 0 699 910 wird ein carouselartiges Probeentnahmegerät vorgeschlagen, bei welchem eine zweiarmig ausgebildete Entnahmestation vorgesehen ist. Der untere Arm ist vorgesehen, um auf ein Probegefäss, angeordnet im Carousel, im Sinne eines Niederhalters geführt zu werden und vom oberen Arm nach unten erstreckend ist die Probeentnahmenadel angeordnet. Mittels eines einzigen Antriebes werden die beiden Arme nach unten bewegt bis der untere Arm auf dem Probegefäss aufliegt und dieses positioniert worauf anschliessend mittels des oberen Armes die Probeentnahme erfolgt.

Schliesslich wird in der EP 0 425 892 ein kreisrund ausgebildetes Carousel beschrieben geeignet für die Aufnahme einzelner kreissegmentartiger Samplecontainers. Die, die Probegefässe enthaltenden Container werden unterhalb einer Probeentnahmestation hindurchgefördert bei welcher ein plattenartig ausgebildeter Niederhalter angeordnet ist. Diese Niederhalterplatte ist fest mit einer Probeentnahmestation verbunden, und durch Bohrungen in der Platte hindurch erfolgt die Probeentnahme.

Bei allen im Stand der Technik bekannten Einrichtungen werden die Probegefässe laufend zur Pipettierstation gebracht, an welcher die Gefässrückhaltung in der Regel mit einem mit dem Nadelkopf verbundenen Niederhalter erfolgt. Mit anderen Worten sind die notwendigen Teile zur Zentrierung und Halterung der Gefässe mit der Pipettiereinrichtung verbunden und sind in der Regel mit der Probeentnahmeeinrichtung bewegungsgekoppelt. Mit anderen Worten sind an der Probeentnahmeeinrichtung, insbesondere im Bereich der Probeentnahme selbst, viele bewegliche Teile vorgesehen, womit die Vorrichtung anfällig und teuer wird.

Es ist deshalb eine Aufgabe der vorliegenden Erfindung eine Anordnung bzw. Vorrichtung zu schaffen, bei welcher eine zuverlässige Probeentnahme erfolgen kann, ohne dass Gefässe bei der Probeentnahme bewegt werden, die Probeentnahme erfolgen kann währendem die Einrichtung mit neuen Behältnissen beschickt wird bzw. bereits bearbeitete Behältnisse entfernt werden und welche die oben erwähnten Nachteile nicht aufweist.

Erfindungsgemäss wird eine Anordnung zum Entnehmen von Proben gemäss dem Wortlaut nach Anspruch 1 vorgeschlagen.

Die erfindungsgemässe Anordnung zum Entnehmen von Proben aus Behältnissen enthalten fluide Medien weist eine weitgehendst carouselartige Einrichtung für das Anordnen der Behältnisse auf. An der carouselartigen Einrichtung ist eine weitgehendst kreisrunde, scheibenartige Abdeckung vorgesehen, um wenigstens einen Teil der Behältnisse weitgehendst abzudecken und/oder um Verschlüsse an den Behältnissen bei der Probeentnahme zu sichern. In der Abdeckung sind wenigstens an einem Teil der Positionen der Behältnisse Öffnungen vorgesehen, um die jeweilige Entnahme der Probe durch diese zu ermöglichen.

Die carouselartige Einrichtung weist weiter eine oder mehrere Aufnahmen auf für das Anordnen und Positionieren von rack- oder kartuschenartigen Halterungen für das Aufnehmen eines oder mehrerer Probenbehältnisse.

Wiederum gemäss einer weiteren Ausführungsvariante wird vorgeschlagen, dass die carouselartige Einrichtung rotierbar ist und die einzelnen Halterungen sternförmig in der Einrichtung angeordnet sind mit jeweils entsprechend sternförmig angeordneten Öffnungen bzw. Bohrungen in der scheibenartigen Abdeckung.

Weiter vorgesehen ist eine Steuerung, um die Bewegung der carouselartigen Einrichtung mit derjenigen einer Probeentnahmeeinrichtung zu koordinieren, welch letztere vorgesehen ist, um die Proben an einer oder mehreren Positionen der carouselartigen Einrichtung durch die Abdeckung hindurch zu entnehmen. Hierzu wird weiter vorgeschlagen, dass eine Verschiebeeinrichtung vorgesehen ist, um die Probeentnahmeeinrichtung über die Abdeckung bzw. entlang der Abdeckung zu bewegen, um so die Probeentnahme an unterschiedlichen Positionen der carouselartigen Einrichtung durch die Abdeckung hindurch zu ermöglichen.

Wiederum gemäss einer weiteren Ausführungsvariante wird vorgeschlagen, dass in oder an der carouselartigen Einrichtung und/oder gegebenenfalls in oder an der Abdeckung Positionierhilfen vorgesehen sind, um die Öffnungen der Behältnisse wenigstens nahezu zentriert in Bezug auf die jeweiligen Öffnungen in der Abdeckung anzuordnen. Dies ist wichtig, damit bei der Probeentnahme beim Eintauchen einer Probeentnahmenadel bzw. einer Pipette diese nicht, in Folge nicht korrekter Position des Behältnisses, beschädigt werden kann.

Schliesslich sind an der carouselartigen Einrichtung mindestens eine Eingabestation sowie mindestens eine Entnahmestation vorgesehen, für die Eingabe bzw. Entnahme der Behältnisse bzw. für die Eingabe oder Entnahme der rack- oder kartuschenartigen Halterungen.

Weiter erfindungsgemäss vorgeschlagen wird eine rack- oder kartuschenartige Halterung geeignet für eine Anordnung bzw. eine carouselartige Einrichtung, wie oben erfindungsgemäss beschrieben. Die Halterung ist vorgesehen, um ein oder mehrere Behältnisse während der Probeentnahme in der carouselartigen Einrichtung positionsgerecht festzulegen. Hierzu ist ein oberes Abdeckprofil an der Halterung vorgesehen, welches unabhängig davon, ob das Behältnis verschlossen oder offen ist, vorgesehen ist, um ein Verschieben des Behältnisses in der Halterung zu verhindern.

Weiter vorgeschlagen wird ein Verfahren gemäss dem Wortlaut nach Anspruch 9. Analog der Anordnung wird vorgeschlagen, dass in einer carouselartigen Einrichtung ein oder mehrere Behältnisse enthalten fluide Medien bewegt werden und die Probeentnahme durch eine Abdeckung an der carouselartigen Einrichtung hindurch erfolgt.

Weitere bevorzugte Ausführungsvarianten sowohl der Anordnung wie auch des Verfahrens sind in den abhängigen Ansprüchen charakterisiert.

Die Erfindung wird nun anschliessend beispielsweise und unter Bezug auf die beigefügten Figuren näher erläutert.

### Dabei zeigen:

- Figur 1: in Perspektive schematisch eine carouselartige Einrichtung sowie andeutungsweise eine Probeentnahmeeinrichtung,
- Figur 2: eine weitere perspektivische Ansicht der carouselartigen Einrichtung,

- Figur 3: die carouselartige Einrichtungen der Figuren 1 und 2 in wenigstens teilweise auseinander gezogenem bzw. demontiertem Zustand, und
- Figur 4: schematisch in Perspektive eine rackartige Halterung für das positionsfeste Anordnen der Behältnisse.

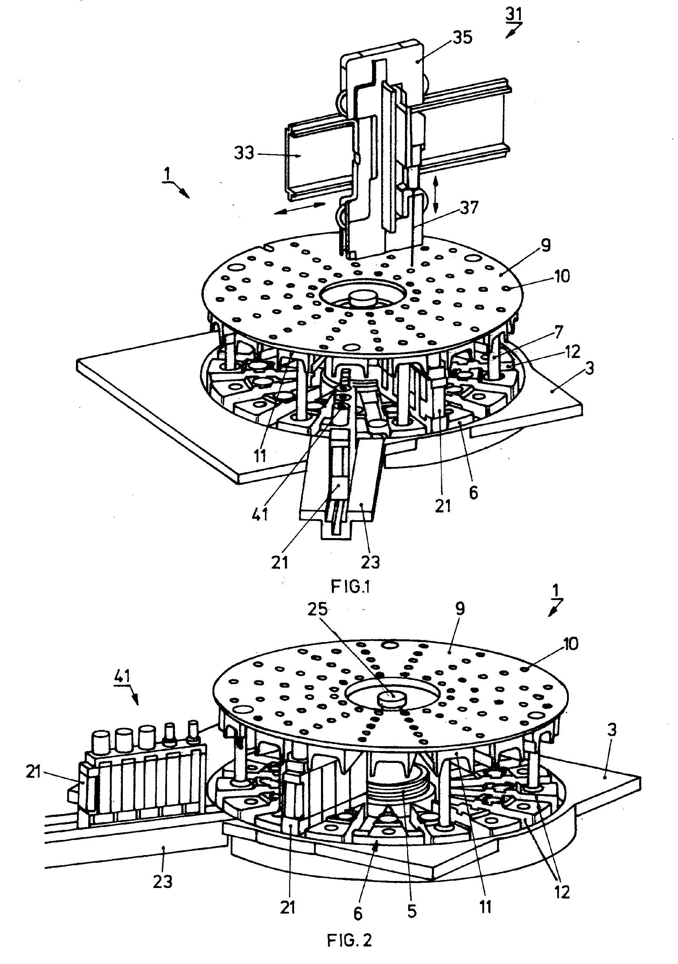

In Figur 1 ist schematisch in Perspektive eine erfindungsgemäss vorgeschlagene carouselartige Einrichtung 1 dargestellt, welche in oder auf einem Gehäuse 3 angeordnet ist. Um eine mittig ausgebildete Rotornabe rotationsbeweglich ist der Rotor bzw. das so genannte "Rackcarousel" 6 angeordnet, welches geeignet ist für die Aufnahme von so genannten Racks oder rack- bzw. kartuschenartigen Behältnisshalterungen 21. Durch Stützen 7 gehalten ist eine Abdeckung 9, in welcher Lochungen 10 angeordnet sind. Die Racks bzw. Halterungen 21 werden von einer Eingabestation 23 in die carouselartige Einrichtung 1 eingegeben, in dafür vorgesehene Führungssegmente, gebildet durch entsprechende Führungen 11 und 12 an der Abdeckung 9 bzw. der Rotorbasisplatte 6. Dabei sind diese Führungssegmente derart, dass die Öffnungen der einzelnen Behältnisse 41 jeweils direkt zentriert unter eine entsprechende Öffnung 10 zu liegen kommen .

Für die Entnahme der Probe aus den Behältnissen 41 ist weiter schematisch und nur andeutungsweise eine Probeentnahmestation 31 dargestellt, an welcher eine entlang beispielsweise einer Schiene 33 verschiebliche Entnahmeeinrichtung 35 angeordnet ist. Für die eigentliche Probeentnahme selbst dient eine Probeentnahmenadel bzw. Pipette 37, welche an einer jeweiligen Position durch die Öffnungen 10 hindurch in ein darunter angeordnetes Probegefäss 41 eingetaucht werden kann.

Figur 2 zeigt eine etwas andere perspektivische Darstellung der carouselartigen Einrichtung 1 aufweisend Gehäuse 3, Rotorcarousel 6 sowie Abdeckplatte 9 mit den darin angeordneten Öffnungen 10.

Für die Probeentnahme werden die einzelnen Racks 21 enthaltend die Behältnisse 41 von der Eingabestation 23 in den Rotor geschoben, wobei sie beispielsweise seitlich im Rotor sowie auch in der Abdeckung 9 durch die Führungen 11 und 12 geführt werden. Die Racks sind gegen die Rotornabe wie auch nach aussen durch das Gehäuse oder gegebenenfalls ein separaten Ring in Position gehalten. Mit dieser Konstruktion wie Rackführungen und Positionshilfen sind nun die einzelnen Gefässe 41 in allen Richtungen abgesichert positioniert, auch wenn der Rotor sich mit den Racks um die Rotornabe dreht.

Die Abdeckung bzw. Niederhalterscheibe 9 ist wie erwähnt mit Durchgangslöcher 10 versehen, die mit dem Zentrum des jeweilig darunter angeordneten Gefässes bzw. Behältnisses übereinstimmen.

Durch diese Löcher hindurch werden die Gefässkappen mit der Probeentnahmenadel durchstochen und die Proben entnommen. Beim Hochfahren der Nadel 37 aus dem entsprechenden Gefäss wird dieses durch die Niederhalterscheibe 9 zurückgehalten.

Dabei ist es möglich die Probeentnahme an jeder beliebigen Rotorposition durchzuführen, so dass falls notwendig eine verzögerte Nachpipettierung möglich ist, ohne dass die Einrichtung zurückgedreht werden muss oder ohne dass das Rack bzw. die Halterung neu beschickt werden muss. Es ist auch Beschickung und das Abarbeiten eines Notfallracks möglich, ohne den kontinuierlichen Prozessablauf zu stören.

Der grosse Vorteil der erfindungsgemäss vorgeschlagenen Anordnung liegt darin, dass sämtliche Behältnisse in der Einrichtung durch die Niederhalterscheibe gehalten sind, womit während des ganzen Betriebes an jeder Stelle der Anordnung eine Probeentnahme möglich ist. Im Stand der Technik werden die Behältnisse jeweils an die Probeentnahmestation zugeführt und nur an dieser ist die Probeentnahme möglich. Hier kann durch entsprechendes Anordnen und Ausbilden der Probeentnahmeeinrichtung und durch wirkverbundene Steuerung die Probeentnahme an jeder Stelle erfolgen. Ja es ist gar möglich zwei oder mehrere Probeentnahmeeinrichtungen vorzusehen und durch entsprechende Steuerung der Vielzahl von Probeentnahmeeinrichtungen, kann gleichzeitig an verschiedenen Stellen der carouselartigen Einrichtung die Probeentnahme erfolgen.

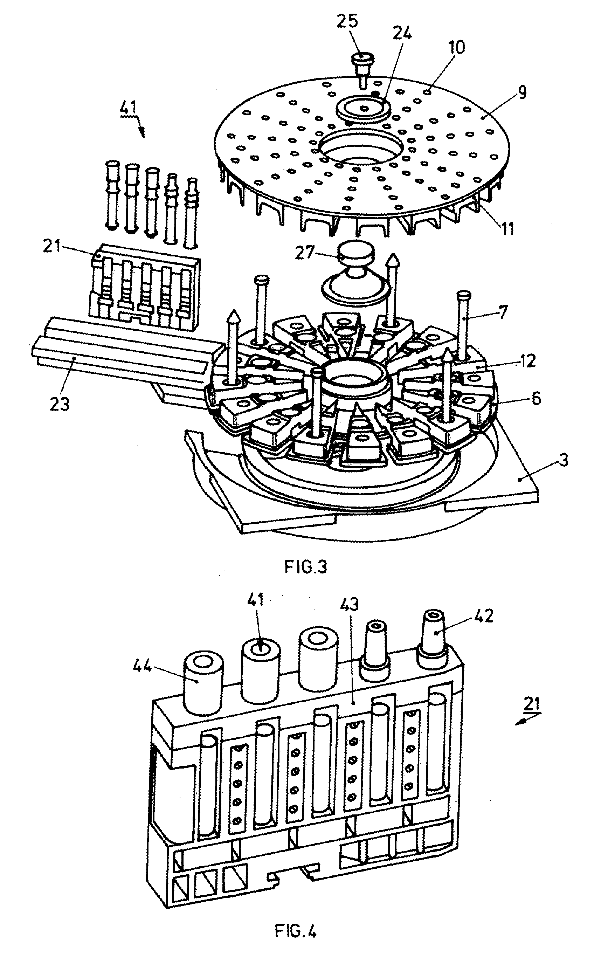

In Figur 3 ist die carouselartige Einrichtung der Figuren 1 und 2 in wenigstens teilweise demontiertem bzw. auseinander gezogenem Zustand schematisch dargestellt. Wiederum erkennbar ist die Basisplatte bzw. das Gehäuse 3 auf welcher davon abgehoben das Rotorcarousel 6 dargestellt ist. Von den Verbindungsstützen abgehoben dargestellt ist die Abdeckung bzw. Niederhalterplatte 9 in welcher die Öffnungen 10 angeordnet sind. Der grosse Vorteil der erfindungsgemässen Vorrichtung besteht darin, dass die Niederhalterplatte 9 vom Rotor beispielsweise durch die Verwendung eines Zentrierdeckels 24 und einer entsprechenden Zentrierschraube bzw. einem Drehkreuz 25 abgehoben bzw. wieder montiert werden kann. Die Montage erfolgt durch Aufsetzen der Niederhalterscheibe 9 auf die Stützen 7 und dem Befestigen mittels Drehkreuz 25 und einem Zentrierdeckel 24 in einem weiteren Drehkreuz 27 für das Halten auf der Rotorcarouselbasisplatte 6. Ebenfalls auseinander gezogen dargestellt sind die beispielsweise fünf Behältnisse 41, entnommen aus dem Rack 21.

Eine carouselartige Einrichtung wie dargestellt in den Figuren 1 bis 3 muss selbstverständlich so dimensioniert bzw. ausgelegt werden, dass sie in einem entsprechenden Diagnosegerät eingebaut werden kann. Möglicherweise können gar bestehende carouselartige Einrichtungen, wie bekannt aus dem Stand der Technik, entsprechend umgebaut bzw. modifiziert werden, indem eine weitgehendst alle im Carousel angeordneten Behältnisse überdeckende Niederhalterscheibe 9 angeordnet bzw. montiert wird.

Unter Bezug auf Figur 4 soll schliesslich eine erfindungsgemässe rack- bzw. eine kartuschenartige Halterung näher beschrieben werden. Das in Figur 4 vorgesehene Rack 21 ist geeignet für die Aufnahme von fünf Samplegefässen bzw. Behältnissen 41. In der Darstellung gemäss Figur 4 weisen zwei dieser Gefässe 41 Deckel 42 auf welche beispielsweise auf dem Gefäss aufgeschraubt sein können. Die Gefässe können aber auch offen sein, so dass es vorteilhaft ist für das positionssichere Zentrieren dies mit so genannten Caps 44 zu versehen, welche von oben her auf die Gefässe 41 aufgesetzt werden. Weiter kann es vorteilhaft sein, nach Einsetzen der Gefässe bzw. Behältnisse 41 in das Rack 21 eine so genannte Rackabdeckung 43 anzuordnen, um die Behältnisse zusätzlich positionsgetreu anzuordnen, damit diese, eingesetzt in der carouselartigen Einrichtung, genau zentriert unter jeweilige Öffnungen 10 in der Niederhalterscheibe 9 zu liegen kommen. Dies ist wichtig, damit bei der Probeentnahme die Nadel genau zentriert in das jeweilige Gefäss eingeführt werden kann und kein Verkanten auftreten kann, welches in der Regel zu einer Beschädigung der Nadel führt.

Bei der erfindungsgemäss vorgeschlagenen Lösung ist es vorteilhaft, wenn die Racks vor dem Einführen in die carouselartige Einrichtung mit dem Rackdeckel 43 versehen werden. Anschliessend werden die Racks in die Rotoreinrichtung bzw. die Einrichtung geschoben und im Carousel rotiert, wobei während der Rotation, welche vorzugsweise schrittweise erfolgt, die Probeentnahme erfolgen kann. In der Regel wird nach Durchlaufen eines Zyklusses das Rack wiederum aus dem Rotor bzw. der Einrichtung entfernt.

Der grosse Vorteil der erfindungsgemässen Einrichtung besteht darin, dass wie bereits oben erwähnt durch das Anordnen der Niederhalterscheibe jederzeit an jeder Stelle der Rotoreinrichtung eine Probeentnahme erfolgen kann. Die zum Durchstechen nötigen mechanischen Massnahmen sind im Rackdurchlauf integriert, wodurch ein hoher Durchsatz ohne zeitliche Verzögerung möglich wird.

Zudem stellt die erfindungsgemässe Anordnung eine einfache und kostengünstige Konstruktion dar, ohne zusätzlich sich bewegende Teile an der Pipettier- bzw. Probeentnahmestation.

Die Probegefässe sind sicher geführt und gehalten bei mitlaufender Niederhalterscheibe.

Schliesslich ist eine einfache Reinigung möglich durch Entfernen der Niederhalterscheibe, indem die im Nabenzentrum angeordnete Schraube einfach gelöst werden kann und der Rotor bzw. die Einrichtung mit der Niederhalterscheibe herausgenommen und gereinigt werden kann.

Die Erfindung eignet sich insbesondere für medizinische Geräte zur Sampleprobeentnahme und zwar vorzugsweise im Diagnosebereich.

Bei der unter Bezug auf die Figuren 1 bis 3 dargestellten und beschriebenen Einrichtung bzw. dem Rotor und dem unter Bezug auf Figur 4 dargestellten und beschriebenen Rack handelt es sich selbstverständlich nur um Beispiele, welche dem besseren Verständnis der vorliegenden Erfindung dienen. Keinesfalls ist die Erfindung auf die dargestellten Einrichtungen beschränkt und irgendwelche Modifikationen oder Abänderungen sind möglich und fallen selbstverständlich ebenfalls unter den Schutzbereich der vorliegenden Patentanmeldung. So ist insbesondere die Materialwahl der unter Bezug auf die Figuren 1 bis 4 beschriebenen Bestandteile unerheblich, sowohl metallene Werkstoffe wie auch polymere Werkstoffe können je nach Verwendungszweck für die verschiedenen Teile verwendet werden. Auch der Antrieb ist nicht Gegenstand der vorliegenden Erfindung und irgendwelche geeignete Antriebe für die erfindungsgemässen Einrichtungen können verwendet werden.

Schliesslich sei ergänzend noch einmal darauf hingewiesen, dass sowohl eine Pipettier- bzw. Probeentnahmestation an der carouselartigen Einrichtung angeordnet werden kann, wie auch 2 oder mehrere derartiger Stationen. Auch die Organisation bzw. die Steuerung der einzelnen Probeentnahmen kann auf x beiliegende Art und Weise erfolgen.

## Patentansprüche

1. Anordnung zum Entnehmen von Proben aus Behältnissen enthaltend fluide Medien aufweisend eine weitgehenst carouselartige Einrichtung für das Anordnen der Behältnisse sowie mindestens eine Entnahmevorrichtung für das Entnehmen der Proben aus den Behältnissen, **dadurch gekennzeichnet, dass** eine weitgehenst scheibenartige Abdeckung (9) an der carouselartigen Einrichtung (1) vorgesehen ist um wenigstens einen Teil der Behältnisse (41) weitgehenst abzudecken und/oder um Verschlüsse (44) an den Behältnissen bei der Entnahme zu sichern, wobei in der Abdeckung wenigstens an einem Teil der Positionen, der unter der Abdeckung angeordneten Behältnisse Öffnungen (10) vorgesehen sind, um die jeweilige Entnahme durch die Abdeckung hindurch zu ermöglichen.

2. Anordnung nach Anspruch 1, **dadurch gekennzeichnet, dass** die weitgehenst scheibenartige Abdeckung (9)mit der carouselartigen Einrichtung bewegungsgekoppelt ist.

3. Anordnung nach einem der Ansprüche 1 oder 2, **dadurch gekennzeichnet, dass** die Abdeckung weitgehenst kreisrund, scheibenartig ausgebildet ist.

4. Anordnung nach einem der Ansprüche 1 bis 3, **dadurch gekennzeichnet, dass** die carouselartige Einrichtung Aufnahmebereiche bzw. Segmente (12) enthält für die Aufnahme von rack- bzw. kartuschenartigen Halterungen (21) für ein oder mehrere Probenbehältnisse (41).

5. Anordnung nach einem der Ansprüche 1 bis 4, **dadurch gekennzeichnet, dass** die carouselartige Einrichtung rotierbar bewegbar bzw. antreibbar ist, vorzugsweise in einer Stufenbewegung rotierbar.

6. Anordnung nach einem der Ansprüche 1 bis 5, **dadurch gekennzeichnet, dass** die Aufnahmen (12) für die Halterungen (21) sternenförmig in Richtung vom Zentrum gegen die Peripherie verlaufend gerichtet ausgebildet sind und entsprechend Öffnungen, in der scheibenartigen Abdeckung, ausgerichtet auf die für die Behältnisse vorgesehenen Positionen, sternförmig angeordnet sind.

7. Anordnung nach einem der Ansprüche 1 bis 6, **dadurch gekennzeichnet, dass** eine Steuerung vorgesehen ist, um die Bewegung der carouselartigen Einrichtung mit der Probeentnahmeeinrichtung (31) zu koordinieren.

8. Anordnung nach einem der Ansprüche 1 bis 7, **dadurch gekennzeichnet, dass** zwei oder mehrere Probeentnahmeeinrichtungen vorgesehen sind.

9. Anordnung nach einem der Ansprüche 1 bis 8, **dadurch gekennzeichnet, dass** eine Eingabestation und eine Entnahmestation für die Behältnisse bzw. rack- oder kartuschenartigen Halterungen vorgesehen sind.

10. Anordnung nach einem der Ansprüche 1 bis 9, **dadurch gekennzeichnet, dass** die Probeentnahmeeinrichtung (31) derart in Bezug auf die carouselartige Einrichtung (1) verschiebbar bzw. bewegbar angeordnet bzw. angetrieben ist, dass eine Probeentnahme an mindestens zwei oder mehreren Öffnungen (10) durch die Abdeckung (9) hindurch ermöglicht wird.

11. Anordnung nach einem der Ansprüche 1 bis 10, **dadurch gekennzeichnet, dass** in oder an der carouselartigen Einrichtung und/oder gegebenenfalls an der Abdeckung Positionshilfen vorgesehen sind, um die Öffnungen der Behältnisse wenigstens nahezu zentriert in Bezug auf die Öffnungen in der Abdeckung anzuordnen.

12. Rack- oder kartuschenartige Halterung für eine Anordnung nach einem der Ansprüche 1 bis 11, **dadurch gekennzeichnet, dass** die Halterung (21) ein oberes Abdeckprofil (43) aufweist, um in der Halterung angeordnete Behältnisse (41) positionsgenau festzulegen, um beim Transportieren bzw. Anordnen der Halterung in der carouselartigen Einrichtung die Behältnisse in Bezug auf die Öffnungen in der Abdeckung positionsgerecht anzuordnen.

13. Verfahren zum Entnehmen von Proben aus Behältnissen enthalten fluide Medien aufweisend eine weitgehenst carouselartige Einrichtung für das Anordnen der Behältnisse so wie mindestens eine Probeentnahmevorrichtung für das Entnehmen der Proben aus den Behältnissen, **dadurch gekennzeichnet, dass** mittels der Probeentnahmevorrichtung an einer jeweiligen Position durch eine Öffnung in einer Abdeckung der carouselartigen Einrichtung hindurch eine Probe aus dem unter der Öffnung angeordneten Behältnis entnommen wird und beim Zurückziehen der Probeentnahmenadel bzw. der Pipette das Behältnis durch die Abdeckung in Position gehalten wird.

14. Verfahren nach Anspruch 13, **dadurch gekennzeichnet, dass** mittels der Probeentnahmevorrichtung Proben an mindestens zwei oder mehreren Positionen der carouselartigen Einrichtung durch jeweilige Öffnungen in der Abdeckung hindurch aus unter den Öffnungen angeordneten Behältnissen erfolgen, wobei jeweils das unter der Öffnung angeordnete Behältnis mittels der Abdeckung in Position gehalten wird.

15. Verfahren nach einem der Ansprüche 12 oder 13, **dadurch gekennzeichnet, dass** die Probeentnahme mittels zwei oder mehreren Probeentnahmenvorrichtungen erfolgt.

16. Verwendung der Anordnung nach einem der Ansprüche 1-11 in medizinischen Geräten zur Entnahme von Proben vorzugsweise im Diagnosebereich.
